# EUROPEAN PATENT APPLICATION

(11) **EP 3 021 270 A1**
(43) Date of publication of application: **18.05.2016**
(21) Application number: 14306818.7
(22) Date of filing: 17.11.2014
(51) Int. Cl.: G06Q 10/10

(54) **Data processing apparatus and method for assigning a review state to an electronic message**

(71) Applicant: Thomson Licensing, 92130 Issy-les-Moulineaux (FR)
(72) Inventor: Arrighetti, Walter, 30625 Hannover (DE)
(74) Representative: Rittner, Karsten

(57) **Abstract**

An apparatus and a method (10) for assigning a review state, particularly a "partially reviewed" state, to an electronic message displayed in a message display box of a message review tool, are presented. A message body of the electronic message is displayed (13) at least partly in the message display box. A size of a scrolled through part of the message body that has been displayed at least temporarily is determined (14). A display time duration the scrolled through part has been displayed is measured (15) and the review state is determined (17) as completely reviewed when the determined size of the scrolled through part is equal to a complete size of the body and the measured display time duration is equal to or longer than an expected display time duration. The review state is determined (18) as partially reviewed otherwise. The determined state is assigned (19) to the message.

## Description

### FIELD

A data processing apparatus and a method for assigning a review state to an electronic message are presented. In particular, the present disclosure relates to a method for assigning a review state, particularly a "partially-read" state, to an electronic message to be displayed in a message display box of a message review tool, and to a corresponding data processing apparatus and computer readable storage medium.

### BACKGROUND

Users of electronic communication devices, such as smartphones and other mobile devices and computers connected to the Internet, receive a variety of electronic messages, often containing textual information, sometimes containing images or videos, or combinations thereof. Messaging systems for electronic messages include e-mail, chat, instant messaging, messaging and posts in social networks, blogs, text messaging (sms, short message service) etc., but also cloud applications for shared multimedia files.

User interactive messaging systems or services usually mark a message either as "new" (or "unread") or "read", respectively, before and after the user accessed the message for reviewing, e.g. reading or viewing, its content, which does not take into account that the user may have accessed the message without completely reviewing the message content.

In particular, when reviewing electronic messages on remote or portable devices, the user may not have the time or attention level to dedicate to a message for complete or in-depth perception of the message content.

The user may, therefore,
- either not access the message and leave it in an "unread" state, but therefore not knowing what it is about, for example for later reviewing when, e.g., at home, or
- briefly and partially review the message, although the message will be flagged as "read" and might later be forgotten to be completely and thoroughly reviewed, or
- briefly and partially review the message and manually re-flag it as "unread" for later careful review. This requires user interaction with the message and may be forgotten. Further, the information that the message has already been partially reviewed could, otherwise, influence how the message will later be handled. This additional information is lost when simply re-flagging the message as "unread".

Instead of sometimes incorrectly marking the message as either "read" or "unread", an additional partially reviewed or "partially-read" state can be introduced that depends on whether or not the message has been displayed completely. However, to what extent a user has actually perceived the content of the displayed message also depends on the individual user and the circumstances of reviewing the displayed message.

There remains a need for a method for assigning a review state to an electronic message and an apparatus or system allowing implementation of the method, which make available an additional "partially-read" state information to a user, wherein the state should be accurately and automatically determined for the individual user.

### SUMMARY

A method for assigning a review state, particularly a "partially-read" state, to an electronic message is suggested, wherein the review state is determined based on an evaluation of individual user review behavior. Further, a data processing apparatus adapted to perform the method is presented, as well as a corresponding computer readable storage medium.

According to an aspect of the invention, a method for assigning a review state to an electronic message to be displayed in a message display box of a message review tool, the message display box being provided with a scrolling functionality, comprises
- at least partly displaying a message body of the electronic message in the message display box;
- determining a size of a scrolled through part of the message body that has been displayed at least temporarily;
- measuring a display time duration the scrolled through part of the message body has been displayed;
- determining the review state of the electronic message as completely reviewed when the determined size of the scrolled through part is equal to a complete size of the message body and the measured display time duration is equal to or longer than an expected display time duration, and determining the review state of the electronic message as partially reviewed otherwise; and
- assigning the determined review state to the electronic message.

Accordingly, a data processing apparatus comprises
- a processing device;
- a network adapter connected to the processing device and adapted to receive an electronic message;
- a display device; and
- a memory device having stored therein a set of instructions that embodies a message review tool adapted to assign a review state to an electronic message to be displayed by the display device in a message display box of the message review tool, the message display box being provided with a scrolling functionality, wherein the set of instructions, when executed by the processing device, causes the apparatus to
- at least partly display a message body of the electronic message in the message display box;
- determine a size of a scrolled through part of the message body that has been displayed at least temporarily;
- measure a display time duration the scrolled through part of the message body has been displayed;
- determine the review state of the electronic message as completely reviewed when the determined size of the scrolled through part is equal to a complete size of the message body and the measured display time duration is equal to or longer than an expected display time duration, and determine the review state of the electronic message as partially reviewed otherwise; and
- assign the determined review state to the electronic message.

A processing device is, for example, a processor, microprocessor, microcontroller, programmable logic circuitry or other programmable apparatus for processing data and executing instructions.

Further, a computer readable storage medium has stored therein a set of instructions that embodies a message review tool adapted to assign a review state to an electronic message to be displayed by a display device in a message display box of the message review tool, the message display box being provided with a scrolling functionality, wherein the set of instructions, when executed by a computer, causes the computer to
- at least partly display a message body of the electronic message in the message display box;
- determine a size of a scrolled through part of the message body that has been displayed at least temporarily;
- measure a display time duration the scrolled through part of the message body has been displayed;
- determine the review state of the electronic message as completely reviewed when the determined size of the scrolled through part is equal to a complete size of the message body and the measured display time duration is equal to or longer than an expected display time duration, and determine the review state of the electronic message as partially reviewed otherwise; and
- assign the determined review state to the electronic message.

The computer readable storage medium tangibly embodies a program of instructions, which, when executed by a computer, cause the computer to perform the described method steps.

In an embodiment the memory device having stored therein the set of instructions, e.g. a program, has the instructions read or loaded from the computer readable storage medium. In another embodiment the memory device itself is the computer readable storage medium.

The assignment of, e.g., a flag indicating the review state could be performed manually, i.e. the user flags the message as being "partially read", e.g. for a portable device by tapping on a specific icon on a touch-screen display device of the portable device showing the graphical user interface (GUI) of the message review tool, i.e. the GUI of the application where the messages are currently being viewed. According to an embodiment the assignment of a corresponding flag is carried out automatically, exploiting methods of providing a user with a content of a message body up to the end of the content, e.g. using a software that detects whether the message has been completely scrolled through up to the bottom end and enough time has elapsed for it to be read.

An electronic message to be displayed in a message display box of a message review tool is a message that can be displayed, i.e. is displayable, in said message display box. It can be displayed by a user interface of the message review tool being displayed on the display device. The message display box is, for example, a frame or window or other dedicated area, e.g. contained in a web page shown in, for example, an Internet browser window, shown on the display device.

The message body contains the information intended by the sender to be perceived by the recipient user. A scrolled through part of the message body corresponds either to the complete message body, if the message body can be displayed completely at a time (and, therefore, no scrolling of the message is required) in a visible display area of the display device, or to a currently displayed portion of the message body plus another portion that has been displayed before and has been shifted out of the visible display area of the message display box, e.g. automatically or by user interaction, using the scrolling functionality of the message display box. In an embodiment the message body corresponds to the message body of the newest entry in a message chain or thread, i.e. passages reciting previously sent or received messages are not taken into account, as the user will very likely not review those passages as carefully as the new passage.

Further, the size of the scrolled through part of the message body corresponds to its length in the case of scrolling possibility only in one, e.g. vertical, direction.

The display time duration the scrolled through part of the message body has been displayed is the period during which at least a portion of the scrolled through part has been visible on the display device. The expected time duration is, preferably, determined depending on an individual user behavior.

The solution according to the aspects of the invention allows automatic flagging of messages as partially reviewed, i.e. foremost of partially read text messages, but also of messages containing, for example, partially viewed video sequences, based on a comparison between an actual display time duration and an expected one.

For example, the additional review state can be displayed graphically. Usually, read text messages (or their titles/abstracts/senders) are displayed, e.g., in Roman typeface, whereas the unread messages are displayed in the same "bold" variant. The partially reviewed state may, for example, be indicated by using a different font color scheme or may be indicated using "semi-bold" characters or with a different, slanted font etc.

The provided solution at least has the effect that a partially reviewed message can appear as such - neither as completely reviewed, nor as completely new. Hence, the user will not forget that it is an old, yet not completely reviewed message. Later on, e.g. when work resumes, or when the user gets home or just starts to rest, the reviewing can be resumed, when the user can afford the time and provide the attention required to review the message in detail, understand the message and act accordingly.

The review state information is generated automatically from an evaluation of user interaction with the message. If the determined size of the scrolled through part of the message body is smaller than the complete size, the message has not been displayed completely, and the review cannot be considered completed. If the message body has been displayed completely, but for a measured display time duration shorter than the expected display time duration, the time is considered too short for reviewing the message, and the review cannot be considered completed, either. The expected display time duration could be set as a fixed value or, for example, depending, e.g. linearly depending, on the size of the message body. This will lead to results varying with the review behavior of each individual user and, e.g., the type of content of the messages the user receives.

In one embodiment the expected display time duration is calculated depending on a length of text contained in the message body and an average reading speed calculated from lengths of texts contained in message bodies of previously displayed electronic messages and their corresponding previously measured display time durations. For this embodiment, the message body usually contains only or mostly textual information. The length of a text is, for example, calculated by counting the number of letters, characters, words, sentences or paragraphs, or is, for example, estimated by calculating a ratio of dark and light pixels of text passages of the message body. The review state of the message can be determined as partially read or reviewed based on the user interaction with the message in relation to the individual average reading speed of the user, which is estimated based on an evaluation of previous reading speed calculations using the state of the message display box, its display time duration and the amount of text displayed. The proposed automated determination of the partially reviewed state using the individual average reading speed of a user as a threshold which is changed depending on previous behavior of the individual user allows to estimate more accurately whether or not the user has reviewed, i.e. read, the text of a displayed message completely.

In an example embodiment the expected display time duration is calculated further depending on a displayed size of the text contained in the message body. Here, the displayed size of the text is taken into account, for example measured in number of pixels, e.g. in comparison to the width of the message display box. As an example, text messages displayed using very small letters, e.g. displayed on a portable device, such as a smartphone, become difficult to read for some users and require more time, whereas large sized characters are easier and, therefore, faster to read. The expected display time duration can be adjusted accordingly. In the above case, real text size and line size on the display can be logged. For example, TrueType font managers can easily estimate the width of a whole line of text, e.g., in pixels. Further, the scrolling speed of the message display box can be logged, which allows to have an estimate in characters/minute versus the average width of text.

In an example embodiment the expected display time duration is calculated further depending on a distance between a user reading the message body and a display device displaying the message display box. In an example embodiment, a camera located at or close to the display device and generating a picture of the viewer, e.g. a front facing camera embedded in the display device, i.e. the screen, of, for example, a smartphone, tablet PC or notebook computer, is used to generate an image which is then evaluated by an image processing algorithm in order to derive an estimation of a distance between the user and the display device. Depending on the distance, the shown message becomes easier or more difficult to review. Further, it can be verified that the user is indeed reviewing the message and has not, for example, put away the mobile device without switching it off. In an embodiment, a sophisticated image processing is applied which provides an information whether or not the user actually continuously looks at the screen, i.e. the display device, or is distracted. In an embodiment the user's reading speed is determined from tracking his or her eye movement in relation to the scrolling speed applied by the user. Or the detection of the user's eye movements is used for determining that the message has been reviewed completely.

As another example, in the embodiment where the average reading speed is evaluated, the average reading speed is dynamically updated after determining the review state of the electronic message as completely reviewed. In other words, each time the user has completely reviewed, i.e. completely read, a message, the average reading speed value is recalculated. This automatically adapts the average reading speed value to the user behavior, which probably changes over time.

In another embodiment the expected display time duration is calculated depending on a size of one or more files appended to or contained in the message body. The appended files may be any kind of files containing information that might require the user to review, e.g. images or video sequences. The size of an appended file may refer to the number of bytes the file consists of, taken as an indicator for the amount of information contained in the file. The size of the appended file may also refer to, for example, a temporal length of an appended video sequence or the spatial resolution of an appended image as an indicator for an amount of details contained in it.

In one embodiment the expected display time duration is calculated further depending on at least one of a relevance indicator assigned to the electronic message and a time-of-day. A relevance indicator distinguishes between, for example, high priority and low priority messages. It is assumed that high priority messages require a more careful review and, therefore, the expected display time duration is set longer. It should be noted that the relevance indicator can but does not necessarily need to be a dedicated relevance indicator value. Instead, for example the sender's address may be taken as a relevance indicator, wherein the message review tool is configured to allow preselection of certain senders as being more important than others. Further, the time-of-day can be evaluated, e.g. for distinguishing between work time messages and private messages. Furthermore, for example a message review during nighttime may require more time and concentration than during daytime, and the expected display time duration is adapted accordingly. Further, in an embodiment the time-of-day is logged each time a message is reviewed, and preferably additionally for mobile devices also the uptime of the mobile device. An average time-of-day is calculated and compared to an average night/day cycle in order to estimate reading fatigue due to late hours for adaptation of the expected display time duration for the electronic message.

In one embodiment the determined review state can only be determined as completely reviewed when a semantic content of the message body is the only semantic content displayed on a display device displaying the message display box during the measured display time duration. This usually applies when the message display box is the only or is maximized to be displayed as the only frame or window containing relevant semantic content. This is often the case on mobile devices, such as smartphones. Otherwise, the user may be distracted from reviewing the message and the display time duration may be less clearly related to the reviewing effort of the user. For example, no review state estimation may be carried out otherwise. This feature may especially be used with mobile devices, such as smartphones or tablets. If the text displayed on the monitor or display device, e.g. of a smartphone, tablet etc., belongs to the same box (i.e. there is, e.g., just one HTML / DOM box on the screen, like the text of a single e-mail, or a single column of a web page), the calculation starts. If there is more than one semantic content instead, e.g. because of multiple windows simultaneously displayed, multiple text frames in the same web page displayed, etc., the algorithm does not log information.

In one embodiment the review state is only determined as completely reviewed when the message display box remains displayed as topmost box during the measured time duration. Switching over to another box, i.e. another frame, window etc., is used as an indicator for stopping or abandoning the logging of the message display time duration, as the user has been obviously distracted and the measured display time duration, therefore, may not always correspond to the reviewing effort actually spent on the message. The same applies to opening a top pane, e.g. for reading time-of-day, consulting a calendar etc. Further, in case the message is displayed on a telephone, such as a smartphone, in an embodiment an incoming call or an outgoing call can be used as an indicator for distraction of the user.

In one embodiment of the data processing apparatus the apparatus comprises a mobile device containing at least the display device. A mobile device is a handheld or portable device, such as, for example, a mobile phone or smartphone or tablet PC. In the embodiment, if the apparatus comprises a single device, the apparatus is the mobile device. Otherwise, the apparatus comprises more than one device, e.g. a first device with a server and a second device, e.g. the mobile device, with a client.

In one embodiment of the data processing apparatus, the apparatus comprises
at least one client and one server, wherein
- the server is adapted to provide
- at least a first port and a second port adapted for communication with the client and
- a first message container and a second message container, and wherein
- the client is adapted to
- communicate the review state determined as partially reviewed to the server via the second port that differs from the first port and to
- communicate the review state determined as completely reviewed via the first port; and wherein
- the client is adapted to display, using the display device, a content of the first message container and the second message container as originating from a common message container and
- the server is adapted to at least logically move the electronic message between the first message container and the second message container depending on whether the server receives a corresponding review state communication from the client via the first port or the second port.

In another implementation of a data processing apparatus using the above-described client/server structure, the partiality reviewed state to be communicated from the client to the server is determined differently.

A message container is a folder containing, at least logically, electronic messages. For example, an inbox folder of an e-mail client tool, containing received e-mails, is a message container.

The client may be configured to display the first message container containing the new and the completely reviewed messages and the second message container containing the possibly reviewed messages as a common message container, thereby hiding the two container structure to the user. Or the server is configured to have the second message container invisible to the client, in order to have the client display the messages of both containers as if originating from a single container.

In one embodiment of the data processing apparatus the communication via the first port corresponds to a communication using the Internet Message Access Protocol (IMAP). In the embodiment the communication is established on different ports using, e.g., TCP/IP transport layer protocols, and the ports are used to retrieve and flag read, partially-read and unread messages, wherein virtual separate inboxes are used for partially-read messages, and read and unread messages.

While not explicitly described, the present embodiments may be employed in any combination or sub-combination.

### BRIEF DESCRIPTION OF THE DRAWINGS

- Fig. 1: schematically illustrates a method for assigning a review state to an electronic message to be displayed in a message display box of a message review tool according to an embodiment of the invention;
- Fig. 2: schematically illustrates a data processing apparatus adapted to assign a review state to an electronic message to be displayed in a message display box of a message review tool according to an embodiment of the invention; and
- Fig. 3: schematically illustrates a client-/server architecture for a data processing apparatus adapted to assign a review state to an electronic message according to an embodiment of the invention.

### DETAILED DESCRIPTION OF EMBODIMENTS

For a better understanding, the invention will now be explained in more detail in the following description with reference to the drawings. It is understood that the invention is not limited to these exemplary embodiments and that specified features can also expediently be combined and/or modified without departing from the scope of the present invention as defined in the appended claims.

Referring to Fig. 1, a method 10 for assigning a review state to an electronic message to be displayed in a message display box of a message review tool according to an embodiment of the invention is schematically shown. The message display box is provided with a scrolling functionality. The shown method in particular allows assigning a "partially reviewed" state to the electronic message as an alternative to assigning a "completely reviewed" state.

In the shown embodiment, in a step 11 a complete size of the message body of the electronic message is determined. In a next step 12 the expected display time duration is determined. Alternatively, the size of the message body and the expected display time duration can be set or calculated in advance.

In a next step 13 the message body of the electronic message is at least partly displayed in the message display box, e.g. a frame or window for displaying the message. A start time for displaying the message is logged.

In a next step 14 a size of a scrolled through part of the message body that has been displayed at least temporarily is determined, i.e. calculated. The scrolled through part equals the whole message body, if it can be displayed completely within a visible display area of the message display box. Otherwise, the size of the scrolled through part depends on the amount of scrolling applied to the message, either automatically or by means of interaction of a user, e.g., moving a scrollbar of the message display box.

In a next step 15 a display time duration, during which the scrolled through part of the message body has been displayed, is measured. The measured display time duration is updated continuously at least until the review state of the message is set. In an embodiment the review state itself is set or updated continuously or frequently until the message display box is closed or the review state is set to completely reviewed.

In a next step 16 it is determined whether or not the determined size of the scrolled through part is equal to the complete size of the message body and if the currently measurement display time duration is equal to or longer than an expected display time duration. If both conditions are found true, i.e. if the determined size of the scrolled through part is equal to the complete size of the message body and the measured display time duration is equal to or longer than an expected display time duration, the review state of the electronic message is determined 17 as completely reviewed. Otherwise, i.e. if at least one of the two conditions is found untrue, the review state of the electronic message is determined 18 as partially reviewed.

In a next step 19 the determined review state is assigned to the electronic message. This results in a visual indication of the review state of the electronic message. The message is, for example, marked or labeled in the message review tool, e.g. in a list of messages or in a preview pane of the review tool, as "read" or "partially read", respectively.

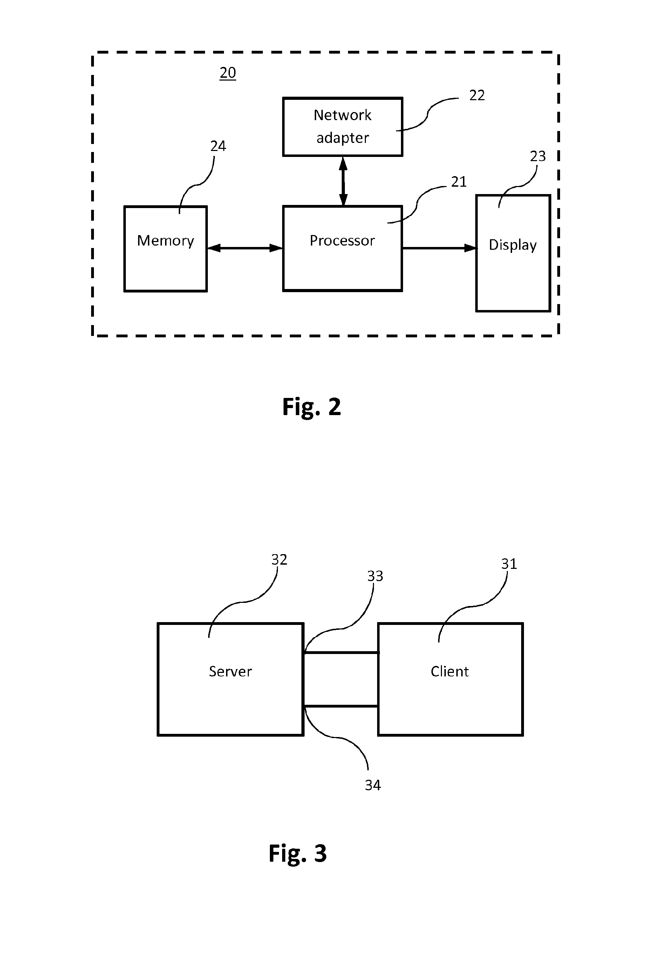

Referring to Fig. 2, a data processing apparatus adapted to assign a review state to an electronic message to be displayed in a message display box of a message review tool according to an embodiment of the invention is schematically shown. The apparatus shown in Fig. 2 allows implementing the advantages and characteristics of the described method for assigning a review state to an electronic message to be displayed in a message display box of a message review tool as part of a corresponding data processing apparatus.

The data processing apparatus 20 shown in Fig. 2 comprises a processing device 21, i.e. at least one processing device. A network adapter 22 is connected to the processing device 21 and is adapted/configured to receive an electronic message, i.e. at least one electronic message. The apparatus 20 further comprises a display device 23 for displaying a user interface of a message review tool, in particular at least a message display box, such as a window or frame. Furthermore, the apparatus 20 comprises a memory device 24 having stored therein a set of instructions that embodies the message review tool adapted to assign a review state to an electronic message to be displayed by the display device 23 in a message display box of the message review tool. The message display box is provided with a scrolling functionality.

For example, the processing device can be a processor adapted to perform the steps according to one of the described methods. In an embodiment said adaptation comprises that the processor is configured, i.e. for example programmed, to perform steps according to one of the described methods.

In an embodiment the apparatus 20 does not contain the memory 24 but is connected or connectable to the memory by means of an interface.

The set of instructions, when executed by the processing device 21, causes the apparatus 20 to execute the method described above. It causes the apparatus 20 to
- at least partly display a message body of the electronic message in the message display box;
- determine a size of a scrolled through part of the message body that has been displayed at least temporarily;
- measure a display time duration the scrolled through part of the message body has been displayed;
- determine the review state of the electronic message as completely reviewed when the determined size of the scrolled through part is equal to a complete size of the message body and the measured display time duration is equal to or longer than an expected display time duration, and determine the review state of the electronic message as partially reviewed otherwise; and
- assign the determined review state to the electronic message.

The method can be easily integrated with some messaging services. On blogs and social networks, the method can be implemented by a change in the APIs.

Referring now to Fig. 3, a client-/server architecture for a data processing apparatus adapted to assign a review state to an electronic message is shown. The apparatus is, for example, the apparatus 20 shown in Fig. 2. The apparatus can but does not need to be implemented in a single device. For example, in an embodiment the client 31 and the server 33 are implemented in different devices. For example, the client 31 may be executed in a mobile device, such as a smartphone. In the case of the apparatus containing client and server distributed on different devices, at least one processing device may be contained in each of the devices containing a corresponding server or client.

The server 32 is adapted to provide at least a first port 33 and a second port 34 adapted for communication with the client 31. The term "port" may refer to a TCP/IP port. More generally, a port can be any communication interface configured to allow communication at least between the client 31 and the server 32. The server 32 is further adapted to provide a first message container and a second message container. A message container is any physical or logical, including virtual, storage unit where messages are held. For example, for e-mail systems the message containers can include an inbox for received e-mails and an outbox for sent e-mails.

The client 31 is adapted to communicate a review state determined as partially reviewed to the server via the second port 34 that differs from the first port 33 and to communicate the review state determined as completely reviewed via the first port 33.

Further, the client 31 is adapted to display, using a display device, a content of the first message container and the second message container as originating from a common message container, and the server 32 is adapted to at least logically move the electronic message between the first message container and the second message container depending on whether the server 32 receives a corresponding review state communication from the client 31 via the first port 33 or the second port 34.

Here, e.g. an e-mail system using the legacy IMAP protocol may use the apparatus, in particular to implement "partially read" messages, as follows:
The client 31 receives e-mail messages using one standard primary IMAP port, e.g. the default TCP port #143, as the first port 33.

When an e-mail is flagged as "read", this is declared to the server 32 via the same first (primary) port 33.

When the e-mail is flagged as "partially read", the client 31 sends a message to the same mail server 32 but using the different, second port 34, e.g., TCP port #144.

The server 32 has the first container and the second container as a first folder visible to the client and an additional second invisible folder (e.g. for each first folder Inbox and Outbox a corresponding virtual second folder Inbox_partial and Outbox_partial, where "partially read" messages from the corresponding visible folders are logically moved into).

From the client's point of view, the Inbox_partial and/or Outbox_partial folders are not made visible to the user: the messages located in such folders are presented to the user as if they were in the visible parent folder - just in a "partially read" status.

If the movement between the first and second message containers, i.e., for example, the Inbox and Inbox_partial, is implemented client-side, the client 31 sends two commands/messages to the server 32:
- The client 31 re-sends the whole e-mail message to the server's (which can be an IMAP server) second port 34 (or for example, via a corresponding Simple Message Transfer Protocol (SMTP) service), like if the e-mail message was newly sent.
- After successful completion of the above, the client issues on the server's first (primary) port 33 an e-mail deletion command.

If the movement between the first and second message containers is implemented server-side, the client 31 sends a specific message on the server's 32 secondary port 34, which is correctly interpreted by a tweaked service and the server 32 then moves the message from its original folder to the corresponding invisible *_partial subfolder.

As will be appreciated by one skilled in the art, aspects of the present principles can be embodied as an apparatus, a system, method or computer readable medium. Accordingly, aspects of the present principles can take the form of a hardware embodiment, a software embodiment or an embodiment combining software and hardware aspects. Furthermore, aspects of the present principles can take the form of a computer readable storage medium. Any combination of one or more computer readable storage medium(s) may be utilized.

Aspects of the present principles may, for example, at least partly be implemented in a computer program comprising code portions for performing steps of the method according to an embodiment of the invention when run on a programmable apparatus or enabling a programmable apparatus to perform functions of an apparatus or system according to an embodiment of the invention.

Further, any shown connection may be a direct or an indirect connection. Furthermore, those skilled in the art will recognize that the boundaries between logic blocks are merely illustrative and that alternative embodiments may merge logic blocks or impose an alternate decomposition of functionality upon various logic blocks.

## Claims

1. Method (10) for assigning a review state to an electronic message to be displayed in a message display box of a message review tool, the message display box being provided with a scrolling functionality, the method **comprising**
- at least partly displaying (13) a message body of the electronic message in the message display box;
- determining (14) a size of a scrolled through part of the message body that has been displayed at least temporarily;
- measuring (15) a display time duration the scrolled through part of the message body has been displayed;
- determining (17) the review state of the electronic message as completely reviewed when the determined size of the scrolled through part is equal to a complete size of the message body and the measured display time duration is equal to or longer than an expected display time duration, and determining (18) the review state of the electronic message as partially reviewed otherwise; and
- assigning (19) the determined review state to the electronic message.

2. Method according to claim 1, **wherein** the expected display time duration is calculated (12) depending on a length of text contained in the message body and an average reading speed calculated from lengths of texts contained in message bodies of previously displayed electronic messages and their corresponding previously measured display time durations.

3. Method according to claim 2, **wherein** the expected display time duration is calculated (12) further depending on a displayed size of the text contained in the message body.

4. Method according to claim 3, **wherein** the expected display time duration is calculated (12) further depending on a distance between a user reading the message body and a display device displaying the message display box.

5. Method according to one of claims 2 to 4, **wherein** the average reading speed is dynamically updated after determining the review state of the electronic message as completely reviewed.

6. Method according to claim 1, **wherein** the expected display time duration is calculated depending on a size of one or more files appended to or contained in the message body.

7. Method according to one of the preceding claims, **wherein** the expected display time duration is calculated depending on at least one of a relevance indicator assigned to the electronic message and a time-of-day.

8. Method according to one of the preceding claims, **wherein** the review state is only determined as completely reviewed (17) when a semantic content of the message body is the only semantic content on a display device displaying the message display box during the measured display time duration.

9. Method according to one of the preceding claims, **wherein** the review state is only determined as completely reviewed (17) when the message display box remains displayed as topmost box during the measured time duration.

10. Data processing apparatus (20), **comprising**
- a processing device (21);
- a network adapter (22) connected to the processing device (21) and adapted to receive an electronic message;
- a display device (23); and
- a memory device (24) having stored therein a set of instructions that embodies a message review tool adapted to assign a review state to an electronic message to be displayed by the display device (23) in a message display box of the message review tool, the message display box being provided with a scrolling functionality, wherein the set of instructions, when executed by the processing device (21), causes the apparatus (20) to
- at least partly display a message body of the electronic message in the message display box;
- determine a size of a scrolled through part of the message body that has been displayed at least temporarily;
- measure a display time duration the scrolled through part of the message body has been displayed;
- determine the review state of the electronic message as completely reviewed when the determined size of the scrolled through part is equal to a complete size of the message body and the measured display time duration is equal to or longer than an expected display time duration, and determine the review state of the electronic message as partially reviewed otherwise; and
- assign the determined review state to the electronic message.

11. Data processing apparatus according to claim 10, **wherein** the apparatus comprises a mobile device containing at least the display device.

12. Data processing apparatus according to claim 10 or claim 11, **comprising**
at least one client (31) and one server (32), wherein
- the server (32) is adapted to provide
- at least a first port (33) and a second port (34) adapted for communication with the client (31) and
- a first message container and a second message container, and wherein
- the client (31) is adapted to
- communicate the review state determined as partially reviewed to the server (32) via the second port (34) that differs from the first port (33) and to
- communicate the review state determined as completely reviewed via the first port (33); and wherein
- the client (31) is adapted to display, using the display device, a content of the first message container and the second message container as originating from a common message container and
- the server (32) is adapted to at least logically move the electronic message between the first message container and the second message container depending on whether the server (32) receives a corresponding review state communication from the client (31) via the first port (33) or the second port (34).

13. Data processing apparatus according to one of claims 10 to 12, **wherein** the communication via the first port (33) corresponds to a communication using the Internet Message Access Protocol.

14. Computer readable storage medium having stored therein a set of instructions that embodies a message review tool adapted to assign a review state to an electronic message to be displayed by a display device in a message display box of the message review tool, the message display box being provided with a scrolling functionality, wherein the set of instructions, when executed by a computer, causes the computer to
- at least partly display (13) a message body of the electronic message in the message display box;
- determine (14) a size of a scrolled through part of the message body that has been displayed at least temporarily;
- measure (15) a display time duration the scrolled through part of the message body has been displayed;
- determine (17) the review state of the electronic message as completely reviewed when the determined size of the scrolled through part is equal to a complete size of the message body and the measured display time duration is equal to or longer than an expected display time duration, and determine (18) the review state of the electronic message as partially reviewed otherwise; and
- assign (19) the determined review state to the electronic message.
